# EUROPÄISCHE PATENTSCHRIFT

(11) **EP 3 374 458 B1**
(45) Veröffentlichungstag und Bekanntmachung des Hinweises auf die Patenterteilung: **31.07.2019**
(21) Anmeldenummer: 16798105.9
(22) Anmeldetag: 08.11.2016
(51) Int. Cl.: C09D 183/16

(54) **SCHUTZSCHICHT GEGEN DIE OXIDATION DES KOLBENS EINES VERBRENNUNGSMOTORS**
PROTECTIVE LAYER PREVENTING OXIDATION OF THE PISTON OF AN INTERNAL COMBUSTION ENGINE
COUCHE DE PROTECTION CONTRE L'OXYDATION DU PISTON D'UN MOTEUR À COMBUSTION INTERNE

(30) Priorität: 09.11.2015 DE 102015221960
(43) Veröffentlichungstag der Anmeldung: 19.09.2018
(73) Patentinhaber: Federal-Mogul Nürnberg GmbH, 90441 Nürnberg (DE)
(72) Erfinder: DANNENFELDT, Margrit, 90480 Nürnberg (DE); BLÜMM, Monika, 90537 Feucht (DE); FUHRMANN, Thomas, 91207 Lauf/Peg. (DE); LEITZMANN, Dominik, 90513 Weiherhof (DE)
(74) Vertreter: Hoffmann Eitle
(86) Internationale Anmeldenummer: PCT/EP2016/076947
(87) Internationale Veröffentlichungsnummer: WO 2017/080986

(56) Entgegenhaltungen:
- WO-A1-2015/072227
- US-A1- 2007 113 802

## Beschreibung

### Technisches Gebiet

Die vorliegende Erfindung betrifft die Verwendung einer Schicht auf Basis von Polysilazan zur Verringerung oder Verhinderung der Oxidation des Kolbens in einem Verbrennungsmotor sowie einen Kolben aus Stahl mit dieser Beschichtung.

### Stand der Technik

Stahlkolben werden im Motor aufgrund ihrer geringeren Wärmeleitfähigkeit viel heißer als Aluminiumkolben. Dies hat zur Folge, dass an der Stahloberfläche verschiedene Reaktionen ausgelöst werden. So wird z.B. am Rand der Verbrennungsmulde im Kolbenboden eine Oxidschicht gebildet, die sich ablösen kann und dabei zu einer Verringerung der Materialschichtdicke an dieser Stelle führt. Im schlimmsten Fall bekommt der Kolben dadurch Risse, was zu einem Materialversagen führt.

Den Folgen dieser Oxidation kann bisher nur durch Maßnahmen begegnet werden, die teuer oder aus anderen Gründen nachteilig sind. Eine Möglichkeit besteht in einer verstärkten Dimensionierung des Kolbens, wodurch dieser schwerer wird. Speziell bei LVD-Kolben, d.h. bei Kolben für Dieselmotoren in PKW oder leichten Nutzfahrzeugen, ist jedoch ein geringes Gewicht des Kolbens vorteilhaft.

Eine andere Möglichkeit zur Verringerung der Oxidation ist die Verwendung von speziellen Legierungen mit hohem Chrom- und Nickelgehalt. Solche Legierungen sind jedoch teuer. Ferner stört ein hoher Chromgehalt die Schichtbildung während der Manganphosphatierung und erhöht außerdem den mit der Pflege des Bades verbundenen Aufwand. Auch das Aufbringen einer galvanischen Schutzschicht auf den Stahlkolben ist mit hohen Kosten verbunden.

Bisher wurden Beschichtungen auf Basis von Polysilazan oder Polysiloxan auf der Oberfläche von Kolben eingesetzt, um entweder die thermische Leitfähigkeit zu erniedrigen oder Ölkohleanbackungen zu vermeiden (siehe z.B. WO 2012/024415, US 2007/0113802 und WO 2006/087113).

Solche Beschichtungen werden in der Regel lediglich in den Hohlräumen des Kolbenbodens, den sogenannten Kühlkanälen, aufgebracht. Dadurch soll verhindert werden, dass die Ölkohle den Kühlkanal zusetzt, sodass der Kolben schlechter gekühlt wird. Die dadurch während des Betriebs auftretenden höheren Kolbentemperaturen können wiederum zu einem mechanischen Versagen des Kolbens führen.

Die in WO 2006/087113 verwendeten Polysiloxan-Schichten werden durch ein Sol-Gel-Verfahren hergestellt. Dieses Verfahren führt jedoch zu porösen Schichten, so dass die Schichten gasdurchlässig und zur Vermeidung der Oxidation ungeeignet sind.

WO 2015/072227 A1 offenbart einen Kolben eines Verbrennungsmotors umfassend eine polysilazanenthaltende Beschichtung zur Abdichtung der Poren in der unterliegenden anodischen Schicht. Diese Schicht befindet sich am Rande der Verbrennungsmulde.

Anders als Ölkohleanbackungen führt die Oxidation v.a. im Bereich des Randes der Verbrennungsmulde zu Problemen, da an dieser Stelle die höchsten Bauteiltemperaturen und große mechanische Belastungen auftreten.

Aufgrund der bisher unzureichenden Möglichkeiten zur Verhinderung der Heißgaskorrosion des Kolbens, besteht der Bedarf nach einer Beschichtung, die sich leicht und kostengünstig aufbringen lässt und die die Heißgasoxidation wirksam verhindert.

Diese Aufgabe wird erfindungsgemäß durch die Verwendung einer Beschichtung auf Basis von Polysilazan und durch das spezielle Verfahren zur Aufbringung dieser Beschichtung gelöst.

### Detaillierte Beschreibung der Erfindung

Die Erfindung betrifft die Verwendung einer Beschichtung, die ein Polymer auf Polysilazan-Basis umfasst, zur Verringerung oder Verhinderung der Oxidation des Kolbens in einem Verbrennungsmotor.

Auf vorteilhafte Weisen lassen sich im Rahmen der Erfindung insbesondere der Muldenrand und die anschließenden Oberflächen schützen, die durch Oxidation am stärksten geschädigt werden. Daher wird erfindungsgemäß bevorzugt der Rand der Verbrennungsmulde und insbesondere der gesamte äußere Kolbenbodenbereich beschichtet. In einer besonders bevorzugten Ausführungsform wird der gesamte Kolbenboden inklusive der Verbrennungsmulde beschichtet.

Erfindungsgemäß wird eine Beschichtung verwendet, die ein Polymer auf Polysilazan-Basis umfasst (im Folgenden auch als Beschichtung auf Polysilazan-Basis bezeichnet). Als Basis kann sowohl anorganisches als auch ein organisches Polysilazan eingesetzt werden. Das erfindungsgemäß eingesetzte anorganische Polysilazan bildet ein amorphes Netzwerk aus Si- und N-Atomen, dass Bausteine der Formel -(H₂Si-NH)ₙ- aufweist und auch als Perhydropolysilazan bezeichnet wird. Bei den organischen Polysilazanen ist das Netzwerk durch organische Gruppen modifiziert, so dass sich Bausteine der Formel -(R¹R²Si-NH)- ergeben. Selbstverständlich können auch Polymere eingesetzt werden, die sowohl anorganische als auch organische Polysilazan-Einheiten enthalten.

Beschichtungen auf Polysilazan-Basis werden herkömmlich für Elektronikbauteile verwendet. Die dafür kommerziell erhältlichen Produkte können im Rahmen der Erfindung eingesetzt werden.

Zur Bildung von anorganischem Polysilazan werden Lösungen von Perhydropolysilazan in Lösungsmitteln eingesetzt. Zum Beispiel kann 20%iges Perhydropolysilazan in Dibutylether (z.B. von der Firma AZ Electronic Materials) eingesetzt werden.

Die organischen Polysilazane können unterschiedliche Reste R¹ und R² aufweisen, z.B. ist ein mit Vinylgruppen modifiziertes Polysilazan einsetzbar. Sie können in unterschiedlichen Lösungsmitteln, wie zum Beispiel Butylacetat, gelöst sein. Diese Lösungen können ggf. weitere organische Beimischungen enthalten. Beispiele für geeignete organische Polysilazane sind HTT 1800 (Merck KGaA) sowie HTA 1500 (KiON Defense Technologies).

Die Dicke der Beschichtung beträgt bevorzugt 0,2 µm bis 400 µm, wobei hohe Schichtdicken in der Regel nur mittels organischen Polysilazanen hergestellt werden können. Bevorzugt beträgt die Dicke der Beschichtung, insbesondere bei Einsatz von anorganischem Polysilazan, 0,2 µm bis 10 µm und besonders bevorzugt 0,5 µm bis 2 µm.

Durch die Reaktion des Polysilazans mit Luftfeuchte, Wasser oder Alkohol bildet sich eine Polysiloxan-Schicht, bei der es sich im Falle des anorganischen Polysilazans um eine amorphe Quarzglasschicht handelt.

Mittels der Erfindung lassen sich insbesondere Kolben aus CrMo-legierten Stählen wirksam vor Oxidation schützen. Als besonders vorteilhaft hat sich dies für Kolben aus 42CrMo4 erwiesen. Diese Legierung ist normalerweise nur für niedrige bis mittlere Belastungen einsetzbar, da sie bei hohen Belastungen inakzeptabel schnell durch Heißgaskorrosion oxidiert.

Ferner betrifft die vorliegende Erfindung ein Verfahren zur Verringerung bzw. Verhinderung der Oxidation des Kolbens in einem Verbrennungsmotor. Dieses Verfahren umfasst das Aufbringen der oben beschriebenen Beschichtung auf Polysiloxan-Basis auf einen Bereich des Kolbens. Das Aufbringen des Polysilazans auf den Kolben kann zum Beispiel mittels Streichen, Gießen und Sprühen in dem Fachmann bekannter Weise durchgeführt werden.

Die so aufgebrachte Zusammensetzung wird zur Vernetzung vorzugsweise auf eine Temperatur von 15°C bis 255°C erwärmt.

Die Beschichtung auf Polysilazan-Basis wandelt sich in den folgenden Tagen unter Einwirkung von Luftfeuchte, Wasser oder Alkohol zumindest teilweise in eine Beschichtung auf Polysiloxan-Basis um. In besonders geeigneter Weise wird das erfindungsgemäße Verfahren so ausgeführt, dass sich das Polysilazan-Netzwerk vollständig in ein Polysiloxan-Netzwerk umwandelt.

Die so hergestellte Polysiloxan-Schicht ist entgegen den im Stand der Technik bekannten Schichten, die mittels eines Sol-Gel-Prozesses hergestellt werden, nicht porös und daher gasdicht, so dass eine Oxidation des Kolbens verhindert wird.

In einer weiteren Ausführungsform betrifft die Erfindung einen Kolben, bei dem zumindest der Rand der Verbrennungsmulde, bevorzugter der gesamte äußere Kolbenbodenbereich, insbesondere der gesamte Kolbenboden inklusive der Verbrennungsmulde, mit der oben beschriebenen Beschichtung auf Polysilazan-Basis versehen ist.

## Patentansprüche

1. Verwendung einer Beschichtung, die ein Polymer auf Polysilazan-Basis umfasst, zur Verringerung oder Verhinderung der Oxidation des Kolbens in einem Verbrennungsmotor.

2. Verwendung nach Anspruch 1, wobei ein Bereich des Kolbenbodens beschichtet wird.

3. Verwendung nach Anspruch 1 oder 2, wobei zumindest der Rand der Verbrennungsmulde beschichtet wird.

4. Verwendung nach Anspruch 3, wobei die gesamte Verbrennungsmulde beschichtet wird.

5. Verwendung nach einem der Ansprüche 1 bis 4, wobei als Basis des Polymers anorganisches oder organisches Polysilazan eingesetzt wird.

6. Verwendung nach einem der Ansprüche 1 bis 5, wobei die Dicke der Beschichtung 0,2 µm bis 400 µm beträgt.

7. Verwendung nach Anspruch 6, wobei die Dicke der Beschichtung 0,5 µm bis 2 µm beträgt.

8. Verwendung nach einem der Ansprüche 1 bis 7, wobei es sich um einen Kolben aus Stahl handelt.

9. Verwendung nach Anspruch 8, wobei es sich um einen Kolben aus 42CrMo4 handelt.

10. Verfahren zur Verringerung oder Verhinderung der Oxidation des Kolbens in einem Verbrennungsmotor, umfassend das Aufbringen der in einem der Ansprüche 1 bis 7 definierten Beschichtung auf einen Bereich des Kolbens.

11. Verfahren gemäß Anspruch 10, wobei das Polysilazan bei einer Temperatur von 15°C bis 255°C vernetzt wird.

12. Verfahren gemäß Anspruch 10 oder 11, wobei die Beschichtung anschließend zumindest teilweise in eine Beschichtung auf Basis von Polysiloxan umgewandelt wird.

13. Kolben, insbesondere Kolben eines Verbrennungsmotors, aus Stahl, der die in einem der Ansprüche 1 bis 7 definierte Beschichtung umfasst, wobei zumindest der Rand der Verbrennungsmulde mit der Beschichtung versehen ist.

14. Kolben nach Anspruch 13, wobei es sich um einen Kolben aus einem CrMo-legierten Stahl handelt.

15. Kolben nach Anspruch 14, wobei es sich um einen Kolben aus 42CrMo4 handelt.

## Claims

1. Use of a coating which comprises a polysilazane-based polymer, to reduce or prevent the oxidation of the piston in an internal combustion engine.

2. Use according to claim 1, wherein a region of the piston crown is coated.

3. Use according to claim 1 or 2, wherein at least the edge of the combustion bowl is coated.

4. Use according to claim 3, wherein the whole of the combustion bowl is coated.

5. Use according to one of claims 1 to 4, wherein inorganic or organic polysilazane is used as a base for the polymer.

6. Use according to one of claims 1 to 5, wherein the thickness of the coating is 0.2 µm to 400 µm.

7. Use according to claim 6, wherein the thickness of the coating is 0.5 µm to 2 µm.

8. Use according to one of claims 1 to 7, wherein the piston is a steel piston.

9. Use according to claim 8, wherein the piston is a piston of 42CrMo4.

10. Method of reducing or preventing the oxidation of the piston in an internal combustion engine, comprising the application of the coating defined in one of claims 1 to 7 to a region of the piston.

11. Method according to claim 10, wherein the polysilazane is cross-linked at a temperature of 15°C to 255°C.

12. Method according to claim 10 or 11, wherein the coating is then at least partly converted into a polysiloxane-based coating.

13. Piston, in particular a piston of an internal combustion engine, of steel, which comprises the coating defined in one of claims 1 to 7, at least the edge of the combustion bowl being provided with the coating.

14. Piston according to claim 13, wherein the piston is a piston of a steel alloyed with CrMo.

15. Piston according to claim 14, wherein the piston is a piston of 42CrMo4.

## Revendications

1. Utilisation d'un revêtement comprenant un polymère à base de polysilazane pour réduire ou empêcher l'oxydation du piston dans un moteur à combustion interne.

2. Utilisation selon la revendication 1, dans laquelle une région de la tête de piston est revêtue.

3. Utilisation selon la revendication 1 ou 2, dans laquelle au moins le bord du bol de combustion est revêtu.

4. Utilisation selon la revendication 3, dans laquelle la totalité du bol de combustion est revêtue.

5. Utilisation selon l'une quelconque des revendications 1 à 4, dans laquelle le polymère est à base de polysilazane minéral ou organique.

6. Utilisation selon l'une quelconque des revendications 1 à 5, dans laquelle l'épaisseur du revêtement est comprise entre 0,2 µm et 400 µm.

7. Utilisation selon la revendication 6, dans laquelle l'épaisseur du revêtement est comprise entre 0,5 µm et 2 µm.

8. Utilisation selon l'une quelconque des revendications 1 à 7, dans laquelle il s'agit d'un piston en acier.

9. Utilisation selon la revendication 8, dans laquelle il s'agit d'un piston en acier de type 42CrMo4.

10. Procédé de diminution ou de prévention de l'oxydation du piston dans un moteur à combustion interne, comprenant l'application du revêtement défini selon l'une quelconque des revendications 1 à 7 sur une région du piston.

11. Procédé selon la revendication 10, dans lequel le polysilazane est réticulé à une température comprise entre 15 °C et 255 °C.

12. Procédé selon la revendication 10 ou 11, dans lequel le revêtement est ensuite au moins partiellement transformé en un revêtement à base de polysiloxane.

13. Piston, en particulier piston d'un moteur à combustion interne, en acier, comprenant le revêtement défini selon l'une quelconque des revendications 1 à 7, dans lequel au moins le bord du bol de combustion est pourvu du revêtement.

14. Piston selon la revendication 13, dans lequel il s'agit d'un piston en acier allié de type CrMo.

15. Piston selon la revendication 14, dans lequel il s'agit d'un piston en acier de type 42CrMo4.
